# EUROPÄISCHE PATENTSCHRIFT

(11) **EP 3 969 769 B1**
(45) Veröffentlichungstag und Bekanntmachung des Hinweises auf die Patenterteilung: **05.06.2024**
(21) Anmeldenummer: 20721142.6
(22) Anmeldetag: 16.04.2020
(51) Int. Cl.: F16D 25/10, F16D 13/70

(54) **KUPPLUNGSVORRICHTUNG, HYBRIDMODUL SOWIE ANTRIEBSANORDNUNG FÜR EIN KRAFTFAHRZEUG**
CLUTCH DEVICE, HYBRID MODULE AND DRIVE ARRANGEMENT FOR A MOTOR VEHICLE
SYSTÈME D'EMBRAYAGE, MODULE HYBRIDE ET SYSTÈME D'ENTRAÎNEMENT POUR UN VÉHICULE À MOTEUR

(30) Priorität: 14.05.2019 DE 102019112602
(43) Veröffentlichungstag der Anmeldung: 23.03.2022
(73) Patentinhaber: Schaeffler Technologies AG & Co. KG, 91074 Herzogenaurach (DE)
(72) Erfinder: HOFSTETTER, Dirk, 76448 Durmersheim (DE)
(86) Internationale Anmeldenummer: PCT/DE2020/100307
(87) Internationale Veröffentlichungsnummer: WO 2020/228884

(56) Entgegenhaltungen:
- WO-A1-2018/054413
- WO-A1-2018/202236
- DE-A1-102014 209 618

## Beschreibung

Die Erfindung betrifft eine Kupplungsvorrichtung, ein Hybridmodul für ein Kraftfahrzeug sowie eine Antriebsanordnung für ein Kraftfahrzeug.

Die DE 10 2014 212 805 A1 lehrt eine Kupplungsvorrichtung in einem Antriebsstrang eines Fahrzeugs, wobei die Kupplungsvorrichtung eine Doppelkupplung ist und ein feststehendes Gehäuse, eine erste Kupplung mit einem ersten Kupplungseingang, der mit einer Antriebswelle einer Brennkraftmaschine verbunden ist, und eine zweite Kupplung umfasst. Eine erste Betätigungsvorrichtung beaufschlagt die erste Kupplung zwecks deren Betätigung mit einer ersten Betätigungskraft. Eine zweite Betätigungsvorrichtung beaufschlagt die zweite Kupplung zwecks deren Betätigung mit einer zweiten Betätigungskraft. Die erste Betätigungsvorrichtung umfasst einen in einem ersten Betätigungsgehäuse verschiebbaren ersten Betätigungskolben und die zweite Betätigungsvorrichtung umfasst wiederum einen in einem zweiten Betätigungsgehäuse verschiebbaren zweiten Betätigungskolben.

Diese Betätigungskolben dienen jeweils zur Bewirkung der ersten und zweiten Betätigungskraft auf ein jeweiliges erstes und zweites Betätigungselement und von dort jeweils auf die erste und zweite Kupplung.

In der in diesem Dokument vorgestellten Ausführungsform der Kupplungsvorrichtung werden die erste und zweite Betätigungskraft über ein gemeinsames Abstützlager abgestützt.

In Kupplungsvorrichtungen, die dazu eingerichtet sind, dass eine erste und eine zweite Kupplung gleichzeitig betätigt werden, beispielsweise wenn die erste Kupplung als K0-Kupplung und die zweite Kupplung als K1-Kupplung ausgebildet ist, kann es an einem gemeinsamen Abstützlager zu einer erhöhten Belastung kommen. Um diese Belastung aufnehmen zu können, muss das Abstützlager geeignet ausgelegt sein, was jedoch üblicherweise mit erhöhten Herstellungsaufwand bzw. Herstellungskosten und/oder erhöhtem Bauraumbedarf einhergeht.

Als weiterer Stand der Technik wird auf die DE 10 2014 209 618 A1 und die WO 2018/202236 A1 verwiesen, aus denen eine Kupplungsvorrichtung gemäß dem Oberbegriff des Patentanspruchs 1 hervorgeht.

Hiervon ausgehend liegt der vorliegenden Erfindung die Aufgabe zugrunde, eine Kupplungsvorrichtung sowie eine damit ausgestattete Antriebsanordnung und ein Hybridmodul zur Verfügung zu stellen, die mit geringem Bauraumbedarf eine hohe Zuverlässigkeit und Lebensdauer gewährleisten.

Die Aufgabe wird durch die erfindungsgemäße Kupplungsvorrichtung nach Anspruch 1 gelöst. Vorteilhafte Ausgestaltungen der Kupplungsvorrichtung sind in den Unteransprüchen 2 bis 7 angegeben.

Ergänzend wird ein Hybridmodul, welches die erfindungsgemäße Kupplungsvorrichtung aufweist, gemäß Anspruch 8 zur Verfügung gestellt.

Des Weiteren wird eine Antriebsanordnung für ein Kraftfahrzeug mit dem erfindungsgemäßen Hybridmodul gemäß Anspruch 9 zur Verfügung gestellt.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Begriffe "axial" und "radial" beziehen sich im Rahmen der vorliegenden Erfindung immer auf die Rotationsachse der Kupplungsvorrichtung.

Die Erfindung betrifft eine Kupplungsvorrichtung in einem Antriebsstrang eines Fahrzeugs mit einem Gehäuse, einer ersten Kupplung mit einem mit einer Antriebswelle verbundenen oder von der Antriebswelle ausgebildeten Kupplungseingang, und einer zweiten Kupplung. Der ersten Kupplung ist eine erste Betätigungsvorrichtung zur Beaufschlagung der ersten Kupplung mit einer ersten Betätigungskraft zugeordnet und der zweiten Kupplung ist eine zweite Betätigungsvorrichtung zur Beaufschlagung der zweiten Kupplung mit einer zweiten Betätigungskraft zugeordnet. Erfindungsgemäß ist vorgesehen, dass die Kupplungsvorrichtung zur Abstützung der ersten Betätigungskraft ein Abstützlager umfasst und zur Abstützung der zweiten Betätigungskraft ein Abstützlager-System umfasst, wobei sich das Abstützlager an einem Element des Gehäuses axial abstützt. Das Abstützlager-System umfasst ein erstes Lagerelement, welches in axialer Richtung zwischen einem Lamellenträger der zweiten Kupplung sowie dem Kupplungseingang angeordnet ist, so dass eine von der zweiten Kupplung auf den Lamellenträger axial übertragene zweite Betätigungskraft von dem Lamellenträger der zweiten Kupplung über das erste Lagerelement auf den Kupplungseingang übertragbar ist. Das Abstützlager-System umfasst ein zweites Lagerelement, welches in axialer Richtung zwischen dem Kupplungseingang sowie dem Element des Gehäuses angeordnet ist, so dass die auf den Kupplungseingang übertragene zweite Betätigungskraft von dem zweiten Lagerelement auf das Element des Gehäuses übertragbar ist.

Entsprechend ist vorgesehen, dass die zweite Betätigungskraft mittelbar durch das Gehäuse bzw. das Element des Gehäuses abgestützt wird, nämlich dadurch, dass zwischen dem Lamellenträger der zweiten Kupplung, der das Lamellenpaket der zweiten Kupplung axial bei deren Betätigung abstützt, ein erstes Lagerelement des Abstützlager-Systems von dem Lamellenträger axial mit der Betätigungskraft beaufschlagt wird. Diese Betätigungskraft wird wiederum auf den Kupplungseingang, der insbesondere als ein Absatz der Antriebswelle ausgeführt ist, übertragen. Dieser Absatz der Antriebswelle wiederum ist über ein zweites Lagerelement des Abstützlager-Systems abgestützt, und zwar an demselben Element des Gehäuses, an dem sich auch das Abstützlager zur Abstützung der ersten Betätigungskraft abstützt. Das Element des Gehäuses ist dabei unmittelbar oder mittelbar mit dem Gehäusebestandteil verbunden, in dem eine jeweilige Betätigungsvorrichtung angeordnet ist und sich dort abstützt.

Das Gehäuse der Kupplungsvorrichtung ist dabei insbesondere ein feststehendes Gehäuse.

Eine jeweilige Kupplung wird von der jeweils zugeordneten Betätigungsvorrichtung mit einer Kraft zwecks Betätigung der jeweiligen Kupplung beaufschlagt. Eine jeweilige Betätigungsvorrichtung ist bevorzugt ein ringförmiges Kolben-Zylinder-System, auch als CSC bezeichnet, welches koaxial zu einer Rotationsachse der Kupplungsvorrichtung angeordnet ist.

Das Abstützlager sowie das Abstützlager-System dienen insbesondere der axialen Abstützung einer jeweiligen Betätigungskraft. Somit wird eine gleichmäßige Verteilung der Abstützkräfte realisiert und entsprechend verhindert, dass nur ein Lager zur Abstützung der Summe der Abstützkräfte dient.

Die axiale Abstützung des Abstützlagers am Element des Gehäuses ist dabei insbesondere an einem Kupplungsdeckel realisiert, der fest mit einem übrigen Gehäusebestandteil verbunden ist.

Der Lamellenträger der zweiten Kupplung ist insbesondere ein Außenlamellenträger der zweiten Kupplung, der gleichzeitig der Innenlamellenträger der ersten Kupplung ist.

Der Kupplungseingang kann insbesondere in Form eines Absatzes der Antriebswelle ausgebildet sein.

Ein Lageraußenring des Abstützlagers kann unmittelbar an dem Element des Gehäuses aufgenommen sein. Ein Lagerinnenring des Abstützlagers kann unmittelbar an dem Kupplungseingang und/oder an einem damit verbundenen Bauteil, beispielsweise einem Rotorträger, aufgenommen sein.

Das Abstützlager kann radial innerhalb der ersten und/oder zweiten Kupplung angeordnet sein.

Die Kupplungsvorrichtung kann nass laufend ausgeführt sein. Die Durchströmung mit einem Kühlmedium kann auch als eine Spritzkühlung ausgeführt sein.

Das Gehäuse kann einen Innenraum der Kupplungsvorrichtung zumindest teilweise umgeben. Das Kühlmedium kann sich in dem Innenraum befinden.

Die erste Kupplung kann einen ersten Kupplungsausgang sowie erste Kupplungslamellen umfassen, die eine Drehmomentübertragung zwischen dem ersten Kupplungseingang und einem ersten Kupplungsausgang bewirken.

Die zweite Kupplung kann einen zweiten Kupplungseingang und einen zweiten Kupplungsausgang sowie zweite Kupplungslamellen umfassen, die eine Drehmomentübertragung zwischen dem zweiten Kupplungseingang und dem zweiten Kupplungsausgang bewirken.

Die Kupplungsvorrichtung kann eine Doppelkupplung sein. Der erste Kupplungsausgang kann mit einer ersten Getriebeeingangswelle eines Getriebes verbunden sein und der zweite Kupplungsausgang kann mit einer zweiten Getriebeeingangswelle des Getriebes verbunden sein. Die erste Kupplung kann eine K0-Kupplung sein. Die zweite Kupplung kann eine K1-Kupplung sein. Die erste Kupplung und zweite Kupplung können gleichzeitig betätigt werden.

Das Abstützlager sowie die beiden Lagerelemente des Abstützlager-Systems sind vorzugsweise als Schrägkugellager ausgeführt.

Gemäß einem weiteren Aspekt der Erfindung liegt das Abstützlager mit seiner radialen Innenseite am Element des Gehäuses an, und mit seiner radialen Außenseite an einem Lamellenträger, insbesondere an einem Außenlamellenträger, der ersten Kupplung an.

Alternativ kann der Lamellenträger auch ein Innenlamellenträger sein.

Entsprechend erfolgt die axiale Abstützung der ersten Betätigungskraft über den Lamellenträger der ersten Kupplung am Abstützlager und die axiale Abstützung des Abstützlagers am Element des Gehäuses.

In einer ergänzenden Ausführungsform ist der Lamellenträger der ersten Kupplung gleichzeitig als Rotorträger zur drehbaren Anordnung eines Rotors einer elektrischen Maschine ausgestaltet.

Dieser Lamellenträger der ersten Kupplung ist in dieser Ausführungsform der Außenlamellenträger.

Gemäß einer weiteren Ausführungsform liegt das erste Lagerelement mit seiner radialen Außenseite am Lamellenträger der zweiten Kupplung an und mit seiner radialen Innenseite am Kupplungseingang an.

Gemäß einem erfindungsgemäßen Aspekt der Kupplungsvorrichtung liegt das zweite Lagerelement mit seiner radialen Außenseite am Kupplungseingang an und mit seiner radialen Innenseite am Element des Gehäuses an.

In konstruktiv vorteilhafter Weise sind das Abstützlager sowie auch die Lagerelemente des Abstützlager-Systems in axialer Richtung zwischen den Betätigungsvorrichtungen auf einer ersten axialen Seite und dem Element des Gehäuses auf einer zweiten axialen Seite der Kupplungsvorrichtung angeordnet. Insbesondere ist vorgesehen, dass das Abstützlager sowie auch die Lagerelemente des Abstützlager-Systems in axialer Richtung zwischen dem Lamellenträger der zweiten Kupplung und dem Element des Gehäuses angeordnet sind.

Gemäß einer weiteren vorteilhaften Ausführungsform ist der Kupplungseingang mittels einer axial verschiebbaren Drehmoment-Übertragungseinrichtung, insbesondere einer Profilverzahnung, mit dem Lamellenträger der ersten Kupplung drehfest gekoppelt, wobei diese Drehmoment-Übertragungseinrichtung einen axialen Versatz zwischen dem Kupplungseingang und dem Lamellenträger der ersten Kupplung zulässt.

Die als Profilverzahnung ausgestaltete Drehmoment-Übertragungseinrichtung kann auch als Schiebeverzahnung bezeichnet werden. Dadurch ist gewährleistet, dass die von dem ersten Lagerelement auf den Kupplungseingang axial aufgebrachte Betätigungskraft nicht vom Kupplungseingang auf den Lamellenträger der ersten Kupplung übertragen wird, sondern auf das axial am Kupplungseingang anliegende zweite Lagerelement übertragen wird, welches die Betätigungskraft wiederum in das Element des Gehäuses leitet.

Die Profilverzahnung kann insbesondere eine radiale Außenverzahnung sein, die mit einer radialen Innenverzahnung des Lamellenträgers der ersten Kupplung in Eingriff steht.

Zwischen dem zweiten Lagerelement und dem Kupplungseingang besteht vorteilhafterweise eine Spielpassung, die verhindert, dass von dem Kupplungseingang eine axiale Kraft auf das zweite Lagerelement übertragen werden kann.

In dieser Ausführungsform ist die Kupplungsvorrichtung des Weiteren derart vorteilhaft ausgestaltet, wenn ebenfalls eine zumindest geringfügige axiale Relativ-Translationsbewegung zwischen dem Lamellenträger der ersten Kupplung und dem zweiten Lagerelement ausführbar ist.

Entsprechend wird dadurch verhindert, dass die in den Lamellenträger der ersten Kupplung eingebrachte zweite Betätigungskraft zur Betätigung der zweiten Kupplung von diesem Lamellenträger auf das Abstützlager zur Abstützung der ersten Betätigungskraft aufgebracht wird.

Insgesamt wird dadurch erreicht, dass die von einer jeweiligen Betätigungsvorrichtung ausgeübte Betätigungskraft von wenigstens einem der jeweiligen Kupplung zugeordneten Abstützlager aufgenommen wird.

In einer weiteren Ausführungsform der Erfindung ist der Lamellenträger der ersten Kupplung ein Außenlamellenträger und der Lamellenträger der zweiten Kupplung ist gleichzeitig ein Innenlamellenträger der ersten Kupplung.

Der Lamellenträger der zweiten Kupplung ist dabei selbst hinsichtlich der zweiten Kupplung als Außenlamellenträger ausgebildet und hat somit eine Doppelfunktion. Ein Innenlamellenträger der zweiten Kupplung bildet eine Ausgangsseite der zweiten Kupplung. Die Ausgangsseite der ersten Kupplung wird durch den Innenlamellenträger der ersten Kupplung gebildet.

Die beiden Ausgangsseiten der Kupplungen sind dazu eingerichtet, mit koaxial zueinander verlaufenden Wellen drehfest verbunden zu werden, zum Beispiel über entsprechende Profilverzahnungen.

Die erfindungsgemäße Kupplungsvorrichtung weist den Vorteil auf, dass eine hohe Zuverlässigkeit und eine lange Lebensdauer mit einem geringen Bauraumbedarf gewährleistet werden.

Dadurch, dass sich die zweite Betätigungskraft und die erste Betätigungskraft an separaten Lagern am Element des Gehäuses abstützen, kommt es nicht zu einer Überlastung eines einzelnen Lagers.

Des Weiteren wird erfindungsgemäß ein Hybridmodul für ein Kraftfahrzeug zum Ankoppeln einer Verbrennungskraftmaschine sowie eines Getriebes zur Verfügung gestellt, das eine erfindungsgemäße Kupplungsvorrichtung sowie eine elektrische Maschine mit einem Rotor aufweist, wobei der Rotor mit dem Kupplungseingang der Kupplungsvorrichtung drehfest verbunden ist.

Dabei ist die Antriebswelle der Kupplungsvorrichtung zur mechanischen Kopplung mit der Verbrennungskraftmaschine vorgesehen.

Lamellenträger der beiden Kupplungen der Kupplungseinrichtung sind dazu eingerichtet, jeweils drehfest mit einer der Wellen verbunden zu werden, die die mechanische Verbindung mit dem Getriebe herstellen.

Bei bevorzugter Ausgestaltung eines Lamellenträgers der ersten Kupplung der Kupplungsvorrichtung als Rotorträger ist vorgesehen, dass der Rotor der elektrischen Maschine drehfest mit diesem Rotorträger verbunden ist. Die Kupplungen der Kupplungseinrichtung sind dabei bevorzugt innerhalb eines vom Rotorträger radial außen begrenzten Raums angeordnet. Insbesondere können die Kupplungen in einer solchen Ausgestaltung ineinander verschachtelt sein, wobei die zweite Kupplung bezüglich der ersten Kupplung radial innen angeordnet ist.

Eine axiale Erstreckung der ersten Kupplung und eine axiale Erstreckung der zweiten Kupplung können sich entsprechend axial überlappen.

Der zweite Kupplungseingang kann mit einem dritten Antriebselement verbunden sein. Das dritte Antriebselement kann ebenfalls ein Elektromotor sein.

Der erste Kupplungsausgang kann mit einem Abtriebselement verbunden sein. Der zweite Kupplungsausgang kann mit dem Abtriebselement verbunden sein. Das Abtriebselement kann ein Getriebe sein, insbesondere ein DHT-Getriebe (Dedicated Hybrid Transmission). Der erste und zweite Kupplungsausgang können einteilig ausgeführt sein.

Das bedeutet, dass die Kupplungsvorrichtung in einem Hybridantriebsstrang eingesetzt sein kann. Das zweite Antriebselement kann Bestandteil einer P1 -Hybrid-Anordnung sein. Das dritte Antriebselement kann Bestandteil einer P2- oder P3-Hybrid-Anordnung sein.

Das Gehäuse kann ein Kupplungsgehäuse, ein Getriebegehäuse oder ein Hybridmodulgehäuse sein. Zwischen dem Gehäuse und der Antriebswelle kann ein Drehdichtring, beispielsweise ein Radialwellendichtring, angeordnet sein.

Weiterhin wird erfindungsgemäß eine Antriebsanordnung für ein Kraftfahrzeug zur Verfügung gestellt, die ein erfindungsgemäßes Hybridmodul, ein Antriebsaggregat, insbesondere eine Verbrennungskraftmaschine, sowie ein Getriebe aufweist, wobei das Hybridmodul mit dem Antriebsaggregat über die Antriebswelle der Kupplungsvorrichtung und mit dem Getriebe über Lamellenträger der Kupplungsvorrichtung mechanisch verbunden ist.

Das angeschlossene Getriebe kann insbesondere ein Planetengetriebe sein, welches mit den Ausgangsseiten der Kupplungen über jeweils eine Welle gekoppelt ist. Die erfindungsgemäße Kupplungsvorrichtung ermöglicht es, Planeten- und Sonnenräder des Planetengetriebes über entsprechende mit den Kupplungen gekoppelte Wellen anzutreiben.

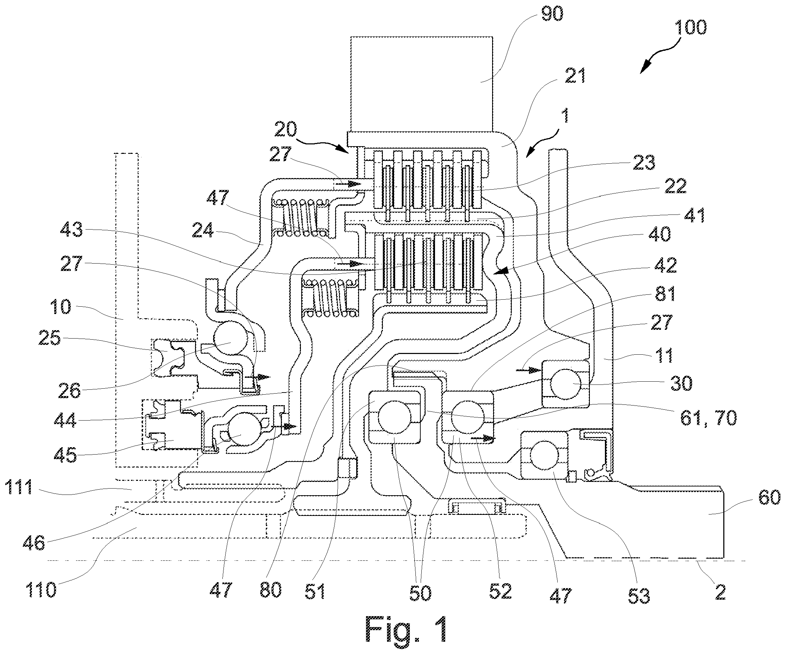

Die oben beschriebene Erfindung wird nachfolgend vor dem betreffenden technischen Hintergrund unter Bezugnahme auf die zugehörige Zeichnung, welche eine bevorzugte Ausgestaltung zeigt, detailliert erläutert. Die Erfindung wird durch die rein schematische Zeichnung in keiner Weise beschränkt, wobei anzumerken ist, dass das in der Zeichnung gezeigte Ausführungsbeispiel nicht auf die dargestellten Maße eingeschränkt sind. Es ist dargestellt in
- Fig. 1:: ein P1-Hybridmodul, welches eine erfindungsgemäße Kupplungsvorrichtung umfasst.

Diese Kupplungsvorrichtung 1 umfasst wiederum auf einer gemeinsamen Rotationsachse 2 in einem Gehäuse 10 eine erste Kupplung 20 sowie eine zweite Kupplung 40.

Des Weiteren umfasst die Kupplungsvorrichtung 1 als Kupplungseingang 70 eine Antriebswelle 60, die zur mechanischen Kopplung an ein externes Antriebsaggregat, wie zum Beispiel eine Verbrennungskraftmaschine, ausgebildet ist.

Die Antriebswelle 60 ist über eine Drehmoment-Übertragungseinrichtung 80 drehfest mit einem Außenlamellenträger 21 der ersten Kupplung 20 verbunden.

An diesem Außenlamellenträger 21 sind Lamellen des Lamellenpakets 23 der ersten Kupplung 20 angeschlossen. Auf deren radialer Innenseite sind die Lamellen des Lamellenpakets 23 an einem Innenlamellenträger 22 der ersten Kupplung 20 angeschlossen.

Der Innenlamellenträger 22 der ersten Kupplung 20 ist dabei gleichzeitig der Außenlamellenträger 41 der zweiten Kupplung 40. In diesem Außenlamellenträger 41 ist das Lamellenpaket 43 der zweiten Kupplung 40 angeordnet. Auf der radialen Innenseite des Lamellenpakets 43 ist dieses an einem Innenlamellenträger 42 der ersten Kupplung 40 angeschlossen. Der Innenlamellenträger 22 der ersten Kupplung 20 ist mit einer ersten Getriebeeingangswelle 110 gekoppelt. Der Innenlamellenträger 42 der zweiten Kupplung 40 ist mit einer zweiten Getriebeeingangswelle 111 gekoppelt. Die Getriebeeingangswellen 110, 111 sind zum Anschluss einer hier nicht dargestellten Getriebeeinheit, insbesondere eines Planetengetriebes, vorgesehen und ausgestaltet.

Ein am Kupplungseingang 70 bzw. an der Antriebswelle 60 anliegendes Drehmoment kann somit über die erste Kupplung 20 bei deren Schließung auf die erste Getriebeeingangswelle 110 und auf die zweite Kupplung 40 geleitet werden, und bei Schließung der zweiten Kupplung 40 auf die zweite Getriebeeingangswelle 111 geleitet werden.

Es ist ersichtlich, dass die in Figur 1 dargestellte Kupplungsvorrichtung Bestandteil eines Hybridmoduls 100 ist. Dieses Hybridmodul 100 umfasst neben der Kupplungsvorrichtung 1 des Weiteren eine elektrische Maschine, von der in Figur 1 lediglich der Rotor 90 dargestellt ist.

Der Rotor 90 ist drehfest mit dem Außenlamellenträger 21 der ersten Kupplung 20 verbunden, der somit gleichzeitig den Rotorträger ausbildet.

Zur Betätigung der ersten Kupplung 20 ist eine erste Betätigungsvorrichtung 25 vorgesehen, welche sich am Gehäuse 10 axial abstützt. Diese erste Betätigungsvorrichtung 25 ist dazu eingerichtet, eine erste Betätigungskraft 27 auf ein erstes Betätigungslager 26 zu leiten, von dem die erste Betätigungskraft 27 über einen ersten Drucktopf 24 auf das Lamellenpaket 23 der ersten Kupplung 20 übertragen wird.

Zur Betätigung der zweiten Kupplung 40 ist eine zweite Betätigungsvorrichtung 45 vorgesehen, welche sich an Gehäuse 10 axial abstützt. Diese zweite Betätigungsvorrichtung 45 ist dazu eingerichtet, eine zweite Betätigungskraft 47 auf ein zweites Betätigungslager 46 zu leiten, von dem die zweite Betätigungskraft 47 über einen zweiten Drucktopf 44 auf das Lamellenpaket 43 der zweiten Kupplung 40 übertragen wird.

Die erste Betätigungsvorrichtung 25 umfasst einen in einem ersten Betätigungsgehäuse verschiebbaren ersten Betätigungskolben zur Bewirkung der ersten Betätigungskraft 27 auf den ersten Drucktopf 24. Die zweite Betätigungsvorrichtung 45 umfasst einen in einem zweiten Betätigungsgehäuse verschiebbaren zweiten Betätigungskolben zur Bewirkung der zweiten Betätigungskraft 47 auf den zweiten Drucktopf 44.

Die erste Betätigungskraft 27 wird von dem Außenlamellenträger 21 der ersten Kupplung 20, der auch als Rotorträger dient, auf ein Abstützlager 30 geführt, welches sich wiederum an einem Element 11 des Gehäuses 10 axial abstützt. Dieses Element 11 kann zum Beispiel ein Bestandteil des Gehäuses 10 sein, oder aber auch ein ebenfalls zum Gehäuse gehöriger Kupplungsdeckel sein. Die zweite Betätigungskraft 47 wird von dem Innenlamellenträger 22 der ersten Kupplung 20, der gleichzeitig der Außenlamellenträger 41 der zweiten Kupplung 40 ist, aufgenommen. Dieser Außenlamellenträger 41 stützt sich axial über ein Abstützlager-System 50 ab. Dieses Abstützlager-System 50 umfasst ein erstes Lagerelement 51 sowie ein zweites Lagerelement 52. Das erste Lagerelement 51 ist in axialer Richtung zwischen dem Außenlamellenträger 41 der zweiten Kupplung 40 und einem Absatz 61 der als Kupplungseingang 70 dienenden Antriebswelle 60 angeordnet und stützt sich axial an diesem Absatz 61 bzw. an dem Kupplungseingang 70 ab. Der Absatz 61 bzw. der Kupplungseingang 70 wiederum stützt sich axial an dem zweiten Lagerelement ab, welches sich axial am Element 11 des Gehäuses 10 abstützt. Entsprechend wird die zweite Betätigungskraft 47 letztendlich, wie auch die erste Betätigungskraft 27, am Element 11 des Gehäuses 10 abgestützt, jedoch erfolgt die Abstützung der Betätigungskräfte 27, 47 an separaten Lagern, sodass es nicht zu einer Überbelastung eines einzelnen Lagers kommt. Zwecks Übertragung der zweiten Betätigungskraft 47 auf das Element 11 des Gehäuses 10 ist die Drehmoment-Übertragungseinrichtung 80 zwischen der Antriebswelle 60 und dem Außenlamellenträger 21 der ersten Kupplung 20 als radiale Profilverzahnung ausgeführt, sodass ein axialer Versatz zwischen der Antriebswelle 60 und dem Außenlamellenträger 21 auftreten kann. Damit eine derartige axiale Bewegung des Außenlamellenträgers 21 nicht zu einer zusätzlichen Belastung des zweiten Lagerelements 52 führt, ist zwischen der radialen Außenseite des zweiten Lagerelements 52 und dem Außenlamellenträger 21 eine Spielpassung 81 vorgesehen.

Das Element 11 des Gehäuses 10 ist mit diesem Gehäuse 10 zumindest in axialer Richtung fest verbunden, sodass die Abstützung aller Betätigungskräfte 27, 47 und dadurch bedingter Reaktionskräfte letztendlich durch das Gehäuse 10 realisiert wird. Des Weiteren umfasst die dargestellte Kupplungsvorrichtung 1 bzw. das dargestellte Hybridmodul 100 ein drittes Lager 53 zwischen dem Element 11 des Gehäuses 10 und der Antriebswelle 60 zur radialen Lagerung der Antriebswelle 60.

Das dritte Lager 53 ist in axialer Richtung zwischen dem zweiten Lagerelement 52 und dem Abstützlager 30 angeordnet.

Mit der erfindungsgemäßen Kupplungsvorrichtung sowie einem damit ausgestatteten Hybridmodul und einer erfindungsgemäßen Antriebsanordnung lässt sich mit geringem Bauraumbedarf eine hohe Zuverlässigkeit und Lebensdauer gewährleisten.

### Bezugszeichenliste

- 1: Kupplungsvorrichtung
- 2: Rotationsachse
- 10: Gehäuse
- 11: Element des Gehäuses
- 20: erste Kupplung
- 21: Außenlamellenträger der ersten Kupplung
- 22: Innenlamellenträger der ersten Kupplung
- 23: Lamellenpaket der ersten Kupplung
- 24: erster Drucktopf
- 25: erste Betätigungsvorrichtung
- 26: erstes Betätigungslager
- 27: erste Betätigungskraft
- 30: Abstützlager
- 40: zweite Kupplung
- 41: Außenlamellenträger der zweiten Kupplung
- 42: Innenlamellenträger der zweiten Kupplung
- 43: Lamellenpaket der zweiten Kupplung
- 44: zweiter Drucktopf
- 45: zweite Betätigungsvorrichtung
- 46: zweites Betätigungslager
- 47: zweite Betätigungskraft
- 50: Abstützlager-System
- 51: erstes Lagerelement
- 52: zweites Lagerelement
- 53: drittes Lager
- 60: Antriebswelle
- 61: Absatz der Antriebswelle
- 70: Kupplungseingang
- 80: Drehmoment-Übertragungseinrichtung
- 81: Spielpassung
- 90: Rotor
- 100: Hybridmodul
- 110: erste Getriebeeingangswelle
- 111: zweite Getriebeeingangswelle

## Patentansprüche

1. Kupplungsvorrichtung (1) in einem Antriebsstrang eines Fahrzeugs mit einem Gehäuse (10), einer ersten Kupplung (20) mit einem mit einer Antriebswelle (60) verbundenen oder von der Antriebswelle (60) ausgebildeten Kupplungseingang (70), und einer zweiten Kupplung (40), wobei der ersten Kupplung (20) eine erste Betätigungsvorrichtung (25) zur Beaufschlagung der ersten Kupplung (20) mit einer ersten Betätigungskraft (27) zugeordnet ist, und der zweiten Kupplung (40) eine zweite Betätigungsvorrichtung (45) zur Beaufschlagung der zweiten Kupplung (40) mit einer zweiten Betätigungskraft (47) zugeordnet ist, wobei die Kupplungsvorrichtung (1) zur Abstützung der ersten Betätigungskraft (27) ein Abstützlager (30) umfasst und zur Abstützung der zweiten Betätigungskraft (47) ein Abstützlager-System (50) umfasst, wobei sich das Abstützlager (30) an einem Element (11) des Gehäuses (10) axial abstützt, und das Abstützlager-System (50) ein erstes Lagerelement (51) umfasst, welches in axialer Richtung zwischen einem Lamellenträger (41) der zweiten Kupplung (40) sowie dem Kupplungseingang (70) angeordnet ist, so dass eine von der zweiten Kupplung (40) auf den Lamellenträger (41) axial übertragene zweite Betätigungskraft (47) von dem Lamellenträger (41) der zweiten Kupplung (40) über das erste Lagerelement (51) auf den Kupplungseingang (70) übertragbar ist, und das Abstützlager-System (50) ein zweites Lagerelement (52) umfasst, welches in axialer Richtung zwischen dem Kupplungseingang (70) sowie dem Element (11) des Gehäuses (10) angeordnet ist, so dass die auf den Kupplungseingang (70) übertragene zweite Betätigungskraft (47) von dem zweiten Lagerelement (52) auf das Element (11) des Gehäuses (10) übertragbar ist, **dadurch gekennzeichnet, dass** das zweite Lagerelement (52) mit seiner radialen Außenseite am Kupplungseingang (70) anliegt und mit seiner radialen Innenseite am Element (11) des Gehäuses (10) anliegt.

2. Kupplungsvorrichtung (1) nach Anspruch 1,
**dadurch gekennzeichnet, dass** das Abstützlager (30) mit seiner radialen Innenseite am Element (11) des Gehäuses (10) anliegt, und mit seiner radialen Außenseite an einem Lamellenträger (21), insbesondere an einem Außenlamellenträger (21), der ersten Kupplung (20) anliegt.

3. Kupplungsvorrichtung (1) nach Anspruch 2,
**dadurch gekennzeichnet, dass** der Lamellenträger (21) der ersten Kupplung (20) gleichzeitig als Rotorträger zur drehbaren Anordnung eines Rotors (90) einer elektrischen Maschine ausgestaltet ist.

4. Kupplungsvorrichtung (1) nach einem der vorhergehenden Ansprüche,
**dadurch gekennzeichnet, dass** das erste Lagerelement (51) mit seiner radialen Außenseite am Lamellenträger (41) der zweiten Kupplung (40) anliegt und mit seiner radialen Innenseite am Kupplungseingang (70) anliegt.

5. Kupplungsvorrichtung (1) nach einem der vorhergehenden Ansprüche,
**dadurch gekennzeichnet, dass** das Abstützlager (30) sowie auch die Lagerelemente (51, 52) des Abstützlager-Systems (50) in axialer Richtung zwischen den Betätigungsvorrichtungen (25, 45) auf einer ersten axialen Seite und dem Element (11) des Gehäuses (10) auf einer zweiten axialen Seite der Kupplungsvorrichtung (1) angeordnet sind.

6. Kupplungsvorrichtung (1) nach einem der Ansprüche 5,
**dadurch gekennzeichnet, dass** der Kupplungseingang (70) mittels einer axial verschiebbaren Drehmoment-Übertragungseinrichtung (80), insbesondere einer Profilverzahnung, mit dem Lamellenträger (21) der ersten Kupplung (20) drehfest gekoppelt ist, wobei diese Drehmoment-Übertragungseinrichtung (80) einen axialen Versatz zwischen dem Kupplungseingang (70) und dem Lamellenträger (21) der ersten Kupplung (20) zulässt.

7. Kupplungsvorrichtung (1) nach einem der Ansprüche 1 bis 6,
**dadurch gekennzeichnet, dass** der Lamellenträger (21) der ersten Kupplung (20) ein Außenlamellenträger (21) ist und der Lamellenträger (41) der zweiten Kupplung (40) gleichzeitig ein Innenlamellenträger (22) der ersten Kupplung (20) ist.

8. Hybridmodul (100) für ein Kraftfahrzeug zum Ankoppeln einer
Verbrennungskraftmaschine sowie eines Getriebes, umfassend die Kupplungsvorrichtung (1) gemäß einem der Ansprüche 1 bis 7 sowie eine elektrische Maschine, die einen Rotor (90) umfasst, der mit dem Kupplungseingang (70) der Kupplungsvorrichtung (1) drehfest verbunden ist.

9. Antriebsanordnung für ein Kraftfahrzeug, umfassend ein Hybridmodul (100) gemäß Anspruch 8 sowie ein Antriebsaggregat, insbesondere eine Verbrennungskraftmaschine, sowie ein Getriebe, wobei das Hybridmodul (100) mit dem Antriebsaggregat über die Antriebswelle (60) der Kupplungsvorrichtung (1) und mit dem Getriebe über Lamellenträger (21, 41) der Kupplungsvorrichtung (1) mechanisch verbunden ist.

## Claims

1. A clutch device (1) in a drive train of a vehicle, having a housing (10), a first clutch (20) with a clutch input (70) connected to a drive shaft (60) or formed by the drive shaft (60), and a second clutch (40), wherein the first clutch (20) is assigned a first actuating device (25) for applying a first actuating force (27) to the first clutch (20), and the second clutch (40) is assigned a second actuating device (45) for applying a second actuating force (47) to the second clutch (40), wherein the clutch device (1) comprises a support bearing (30) for supporting the first actuating force (27) and comprises a support bearing system (50) for supporting the second actuating force (47), wherein the support bearing (30) is axially supported on an element (11) of the housing (10), and the support bearing system (50) comprises a first bearing element (51) arranged in the axial direction between a multiple disc carrier (41) of the second clutch (40) and the clutch input (70), such that a second actuating force (47) transmitted axially from the second clutch (40) to the multiple disc carrier (41) can be transmitted from the multiple disc carrier (41) of the second clutch (40) via the first bearing element (51) to the clutch input (70), and the support bearing system (50) comprises a second bearing element (52), which is arranged in the axial direction between the clutch input (70) and the element (11) of the housing (10), such that the second actuating force (47) transmitted to the clutch input (70) can be transmitted from the second bearing element (52) to the element (11) of the housing (10), **characterised in that** the second bearing element (52) rests with its radial outer side on the clutch input (70) and with its radial inner side rests on the element (11) of the housing (10).

2. The clutch device (1) according to claim 1,
**characterised in that** the support bearing (30) rests with its radial inner side on the element (11) of the housing (10), and with its radial outer side on a multiple disc carrier (21), in particular on an outer multiple disc carrier (21), of the first clutch (20).

3. The clutch device (1) according to claim 2,
**characterised in that** the multiple disc carrier (21) of the first clutch (20) is also designed as a rotor carrier for the rotatable arrangement of a rotor (90) of an electric machine.

4. The clutch device (1) according to any one of the preceding claims, **characterised in that** the first bearing element (51) rests with its radial outer side on the multiple disc carrier (41) of the second clutch (40) and with its radial inner side on the clutch input (70).

5. The clutch device (1) according to any one of the preceding claims, **characterised in that** the support bearing (30) and the bearing elements (51, 52) of the support bearing system (50) are arranged in the axial direction between the actuating devices (25, 45) on a first axial side and the element (11) of the housing (10) on a second axial side of the clutch device (1).

6. The clutch device (1) according to any one of claims 5,
**characterised in that** the clutch input (70) is coupled in a rotationally fixed manner to the multiple disc carrier (21) of the first clutch (20) by means of an axially displaceable torque transmission device (80), in particular a profile toothing, wherein this torque transmission device (80) allows an axial offset between the clutch input (70) and the multiple disc carrier (21) of the first clutch (20).

7. The clutch device (1) according to any one of claims 1 to 6,
**characterised in that** the multiple disc carrier (21) of the first clutch (20) is an outer multiple disc carrier (21) and the multiple disc carrier (41) of the second clutch (40) is also an inner multiple disc carrier (22) of the first clutch (20).

8. A hybrid module (100) for a motor vehicle for coupling an internal combustion engine and a transmission, comprising the clutch device (1) according to any one of claims 1 to 7 and an electric machine comprising a rotor (90), which is connected to the clutch input (70) of the clutch device (1) in a rotationally fixed manner.

9. A drive arrangement for a motor vehicle, comprising a hybrid module (100) according to claim 8 and a drive unit, in particular an internal combustion engine, and a transmission, wherein the hybrid module (100) is mechanically connected to the drive unit via the drive shaft (60) of the clutch device (1) and mechanically connected to the transmission via multiple disc carriers (21, 41) of the clutch device (1).

## Revendications

1. Système d'embrayage (1) dans une chaîne cinématique d'un véhicule comportant un boîtier (10), un premier embrayage (20) avec une entrée d'embrayage (70) reliée à un arbre d'entraînement (60) ou formée par l'arbre d'entraînement (60), et un second embrayage (40), au premier embrayage (20) étant associé un premier dispositif d'actionnement (25) pour appliquer une première force d'actionnement (27) au premier embrayage (20), et au second embrayage (40) étant associé un second dispositif d'actionnement (45) pour appliquer une seconde force d'actionnement (47) au second embrayage (40), le système d'embrayage (1) comprenant un palier de support (30) pour supporter la première force d'actionnement (27) et un système de palier de support (50) pour supporter la seconde force d'actionnement (47), le palier de support (30) s'appuyant axialement sur un élément (11) du boîtier (10), et le système de palier de support (50) comprend un premier élément de palier (51) qui est disposé dans la direction axiale entre un porte-lamelle (41) du second embrayage (40) et l'entrée d'embrayage (70), de sorte qu'une seconde force d'actionnement (47) transmise axialement du second embrayage (40) au porte-lamelle (41) peut être transmise du porte-lamelle (41) du second embrayage (40) à l'entrée d'embrayage (70) par le premier élément de palier (51), et le système de palier de support (50) comprend un second élément de palier (52) qui est disposé dans la direction axiale entre l'entrée d'embrayage (70) et l'élément (11) du boîtier (10) de telle sorte que la seconde force d'actionnement (47) transmise à l'entrée d'embrayage (70) peut être transmise du second élément de palier (52) à l'élément (11) du boîtier (10), **caractérisé en ce que** le second élément de palier (52) repose avec son côté extérieur radial sur l'entrée d'embrayage (70) et son côté intérieur radial sur l'élément (11) du boîtier (10).

2. Système d'embrayage (1) selon la revendication 1,
**caractérisé en ce que** le palier de support (30) repose avec son côté intérieur radial sur l'élément (11) du boîtier (10) et son côté extérieur radial sur un porte-lamelle (21), notamment un porte-lamelle extérieur (21), du premier embrayage (20).

3. Système d'embrayage (1) selon la revendication 2,
**caractérisé en ce que** le porte-lamelle (21) du premier embrayage (20) est également conçu comme support de rotor pour le montage rotatif d'un rotor (90) d'une machine électrique.

4. Système d'embrayage (1) selon l'une des revendications précédentes, **caractérisé en ce que** le premier élément de palier (51) repose avec son côté extérieur radial sur le porte-lamelle (41) du second embrayage (40) et avec son côté intérieur radial sur l'entrée d'embrayage (70).

5. Système d'embrayage (1) selon l'une des revendications précédentes, **caractérisé en ce que** le palier de support (30) et les éléments de palier (51, 52) du système de palier de support (50) sont disposés dans la direction axiale entre les dispositifs d'actionnement (25, 45) sur un premier côté axial et l'élément (11) du boîtier (10) sur un second côté axial du système d'embrayage (1).

6. Système d'embrayage (1) selon la revendication 5,
**caractérisé en ce que** l'entrée d'embrayage (70) est couplée de manière fixe en rotation au porte-lamelle (21) du premier embrayage (20) au moyen d'un dispositif de transmission de couple (80) déplaçable axialement, en particulier une denture profilée, ce dispositif de transmission de couple (80) permettant un décalage axial entre l'entrée d'embrayage (70) et le porte-lamelle (21) du premier embrayage (20).

7. Système d'embrayage (1) selon l'une quelconque des revendications 1 à 6,
**caractérisé en ce que** le porte-lamelle (21) du premier embrayage (20) est un porte-lamelle extérieur (21) et le porte-lamelle (41) du second embrayage (40) est simultanément un porte-lamelle intérieur (22) du premier embrayage (20).

8. Module hybride (100) pour un véhicule à moteur pour coupler un moteur à combustion interne et une boîte de vitesse, comprenant le système d'embrayage (1) selon l'une des revendications 1 à 7 et une machine électrique qui comprend un rotor (90) relié de manière fixe en rotation à l'entrée d'embrayage (70) du système d'embrayage (1).

9. Système d'entraînement pour un véhicule à moteur, comprenant un module hybride (100) selon la revendication 8 et un groupe d'entraînement, en particulier un moteur à combustion interne, ainsi qu'une boîte de vitesse, dans lequel le module hybride (100) est relié mécaniquement au groupe d'entraînement par l'arbre d'entraînement (60) du système d'embrayage (1) et à la boîte de vitesse par l'intermédiaire du porte-lamelle (21, 41) du système d'embrayage (1).
